# EUROPEAN PATENT APPLICATION

(11) **EP 2 511 018 A1**
(43) Date of publication of application: **17.10.2012**
(21) Application number: 10835524.9
(22) Date of filing: 10.12.2010
(51) Int. Cl.: B21C 37/08, B23K 9/18, B23K 37/04

(54) **EQUIPMENT AND METHOD FOR THE AUTOMATED PRODUCTION OF TUBULAR STRUCTURES**

(30) Priority: 11.12.2009 ES 200902319
(71) Applicant: Grupo De Ingenieria Oceanica, S.L., Tenerife, Islas Canarias (ES)
(72) Inventor: DEL CAMPO Y RUIZ DE ALMODÓVAR, Cesar, E-11500 El Puerto de Santa María (Cádiz) (ES)
(74) Representative: Garcia Cabrerizo, Francisco
(86) International application number: PCT/ES2010/000512
(87) International publication number: WO 2011/070201

(57) **Abstract**

Equipment and procedure for the automated manufacture of tubular structures of any size and of polygonal geometry of any number of sides, the said equipment containing a central axis (1) in the form of a tube in which a series of perforations have been made to which are screwed a series of telescopic pistons with suction pad (2) which are those which take the panel and a series of pistons with cooled bronze piece for welding (3), a fixed support (4) and a movable support (6) of the central axis (1), three overhead travelling cranes (7) with drills (8) which make any perforations necessary, automated welding tools (1) which weld the panels of the structure and which can be moved on tracks (12) and a container (9) for the panels (10).

## Description

### Technical sector of the invention

This invention refers to equipment and a procedure for the automated manufacture of tubular structures of any size and geometry depending on the application for which they are intended.

### Background to the invention

The manufacture of polygonal structures is usually carried out in industry by successive manual procedures.

Firstly the steel sheets are taken to the manufacturing area, they are placed and fixed on a suitable support, then the following panel is taken and is placed on the first with the angle suitable for the process being carried out, the angle is re-calculated and the second panel is provisionally fixed by welding. Then by manual or semi-automatic means one sheet is joined to the other. The joined sheets are taken, turned to the degree necessary to place the third panel and so on until the geometrical design is complete.

All of these systems are justified because it is not normal to make long series of similar products, hence the more economical option is that described.

But for the manufacture of series of similar products in a certain quantity the development of an automated system such as that claimed is justified for reasons of economy, efficiency and quality control.

For this reason the subject-matter of this invention is equipment and a procedure for the automated manufacture of tubular structures in an economic and efficient manner.

### Description of the invention

This invention consists of equipment and a procedure for the automated manufacture of tubular structures of any size and polygonal geometry with any number of sides. The equipment includes a central axis constructed with a steel tube of great thickness and small diameter in which a series of perforations have been made perfectly aligned longitudinally and radially, at a suitable and variable distance. The central axis has the thickness necessary to avoid the deflection of the load as a whole.

Certain multi-stage hydraulic pistons with a suction pad in their upper extremity are screwed in a line of perforations of the central axis. In the next line of perforations certain telescopic, multi-stage hydraulic pistons are screwed at the end of which is a longitudinal piece of bronze with tubes in which water circulates to refrigerate the welding area. In the next line of boreholes is screwed another series of multi-stage hydraulic pistons with suction pad, in the next line multi-stage hydraulic pistons with bronze piece and so on, forming successive lines of hydraulic pistons with suction pads and hydraulic pistons with bronze pieces for welding. The number of lines of hydraulic pistons with suction pads is equal to the number of lines with pistons with bronze pieces which is in turn equal to the number of faces or edges which make up the structure to be manufactured.

The central axis is supported at one end by a fixed support with telescopic hydraulic pistons which allow the tube to rise and fall depending on the diameter of the structure to be manufactured. At the other end the central axis rests on a movable support, in such a way that the structure can be manufactured with the desired length. This movable support has collapsible support legs and a rolling structure with bearings to avoid friction and which allows the structure to be moved once manufactured.

The equipment also includes an overhead travelling crane situated parallel to the manufacturing axis, with a series of drills to perforate the tubular structure where required. The drills can be moved by way of cranes to be placed in the exact position for the making of the perforation. The overhead travelling crane can also be moved on tracks in order to be appropriately positioned. There are two overhead travelling cranes also equipped with drills on cranes which, positioned at 90° to the manufacturing axis, allow the making of the screw perforations to be used for the joining of the telescopic stages, if the object being manufactured is tubular telescopic structures.

The equipment also includes a container of panels cut to measure, positioned parallel to the tube which constitutes the central axis, where the panels are arranged vertically on its greater dimension.

Finally the manufacturing equipment for tubular structures has automated arc welding equipment submerged in a portico made up of two tandems in parallel which move suspended from a overhead travelling crane with longitudinal movement, which simultaneously welds a central panel to the other two adjacent panels which make up the first stage of manufacture.

All hydraulic and vacuum connections necessary for the functioning of the system are inside the tube making up the central axis.

The procedure of automated manufacture of tubular structures using the system described above is explained below: firstly the telescopic hydraulic pistons with suction pad are extended to the container with the panels, holding a panel by vacuum. Once this is set, the pistons turn the programmed angle. The hydraulic pistons containing the bronze piece are unfolded and positioned at the sides of the panel. And so on until three panels are in position with the pre-defined geometry.

The automated welding equipment begins at one end to weld the panels linearly in a submerged arc. After this an overhead travelling crane with drills perpendicular to the central axis carries out the necessary perforations automatically. The other overhead travelling crane perpendicular to the central axis makes perforations at the opposite end. When the welding reaches the opposite position the drills of this opposite end will have completed their work and will withdraw and allow the carrying out of the total longitude of the welding. The drills located in the overhead travelling cranes parallel to the axis of manufacturing make the perforations necessary to serve as a rack for future hoisting in the case of telescopic structures. If this is not the case, i.e. if the structures are not telescopic, the drills will not be in operation unless the piece to be manufactured has to be joined by screws to parts and components of the final structure.

For the carrying out of the welding all of the pistons with the piece of cooled bronze must be positioned in the panel joining area.

Once the structure is manufactured normal cylinders parallel to the manufacturing axis and running the length of the same held by hydraulic pistons rise until the structure is resting on them and then all of the pistons, both those with suction pads and those with cooled bronze piece, withdraw and the structure is free resting on motorised turning rollers which allow if to move in a linear fashion.

The movable end which holds the axis of manufacture has collapsible support legs and wheels so that when the structure is to be moved the legs collapse and the support rests on its wheels in the inner part of the tubular structure, thus permitting the removal of the tubular structure to an inspection and painting area, which is carried out by way of motorised supports positioned on tracks transversal to the structure.

### Description of the diagrams

To complete this description and in order to give a better understanding of the characteristics of the invention a set of illustrative diagrams is attached which show the following:

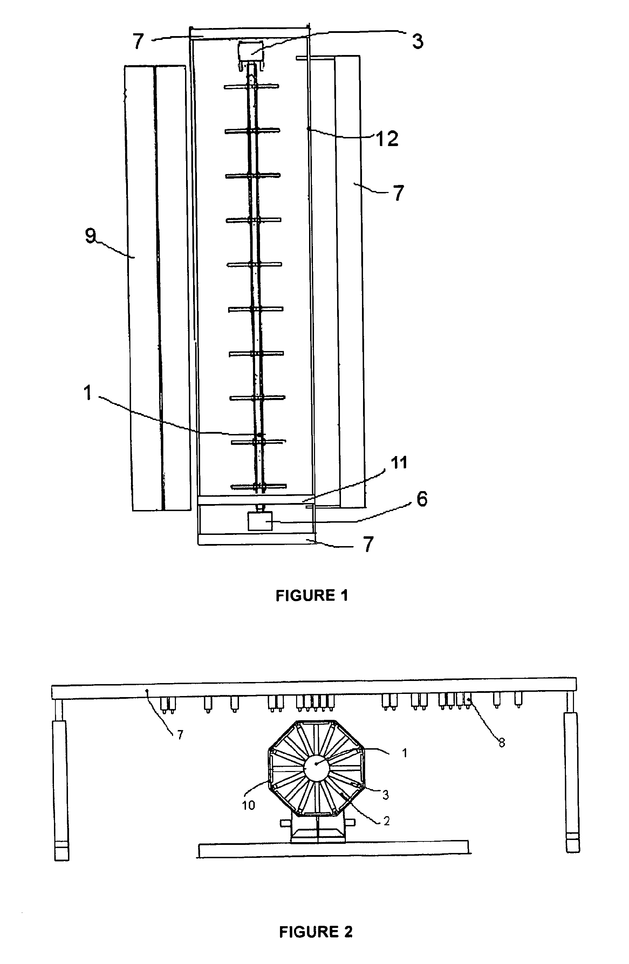

Figure 1: Shows an overhead view of the system
Figure 2: Shows a cross-section with the central axis and the panels in position and a detail of an overhead travelling crane with drills.

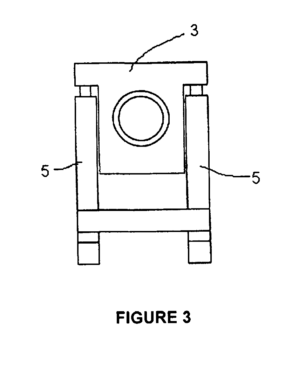

Figure 3: Shows a raised view of the fixed support

The references which appear are the following:
- 1-: Tube or central axis
- 2-: Telescopic hydraulic pistons with sucker
- 3-: Telescopic hydraulic pistons with cooled bronze piece
- 4-: Fixed support
- 5-: Hydraulic pistons of fixed support
- 6-: Movable support
- 7-: Overhead travelling crane with drills
- 8-: Drills
- 9-: Panel container
- 10-: Panels
- 11-: Welding equipment
- 12-: Tracks for overhead travelling crane

### Description of optimal working

For a better understanding of the invention the optimal working of the equipment and procedure for the automated production of a tower or octagonal structure is described below with the aid of diagrams.

The equipment includes a central axis (1) made up of a steel tube of great thickness and small diameter into which are screwed multi-stage hydraulic pistons with a suction pad at their upper end (2) and various multi-stage hydraulic pistons at the end of which there is a longitudinal piece of cooled bronze for welding (3). The pistons are set out in alternate lines there being eight lines of pistons with suction pads (2) and eight lines of pistons with a bronze piece (3), as the structure to be manufactured has eight faces.

The central axis (1) is held at one end by a fixed support (4) with hydraulic and telescopic pistons (5) which make it possible to raise and lower the central axis (1) according to the diameter with which the structure is being manufactured. At the other end the central tube or axis (1) rests on another mobile support (6) with collapsible legs and a rolling system with bearings to avoid friction.

The equipment also includes three overhead travelling cranes (7) one parallel and two perpendicular to the central axis with a series of drills (8) to perforate the tubular structure where necessary. All of the drills (8) and the overhead travelling cranes (7) can be moved to the correct position to carry out the necessary perforations of the structure. For the movement of the overhead travelling cranes there are tracks (12) parallel or perpendicular to the central axis along which the cranes can be moved.

The equipment has automated welding tools (11) in a submerged arc formed by two tandem in parallel which are moved held from an overhead travelling crane with longitudinal movement.

The equipment also includes a panel container (9) located parallel to the central axis of the system where the panels (10) necessary for the manufacture of the structure are arranged, the said panels being positioned vertically and resting on their longer side.

To manufacture the structure firstly the hydraulic pistons (2) with suction pad of one line are extended to the container (9), holding a panel by vacuum (10). Once the panel is set the pistons (2) turn the programmed angle and the hydraulic pistons containing the bronze piece (3) are unfolded and positioned at the sides of the panel (10). Another line of pistons with suction pad (2) take another panel, setting it and turning it by the programmed angle, and so on until there are three panels (10) in position for welding. The automated welding equipment (11) begins at one end to weld the panels linearly in a submerged arc. An overhead travelling crane (7) perpendicular to the central axis (1) with drills then makes the necessary perforations at the other end in such a way that as the welding tools advance the perforations will be made and the welding can continue. The other perpendicular overhead travelling crane (7) with drills (8) makes perforations behind the welding tools as the welding proceeds.

The overhead travelling crane (7) parallel to the axis also makes the perforations programmed in the structure.

This process is repeated in the same way until all of the panels (10) have been taken up, positioned, welded and perforated.

Once the structure is manufactured and resting on turning rollers the pistons (2) and the pistons (3) withdraw, the legs of the movable support (6) collapse and the support rests on its wheels on the inner face of the structure in such a way that the structure can be moved to the inspection and painting zone where it is reviewed and treated as appropriate.

## Claims

1. Equipment for the automated manufacture of tubular structures of any size and of polygonal geometry of any number of sides including:
- A central axis (1) in the form of a tube in which a series of perforations have been made both longitudinally and radially
- A series of hydraulic pistons, telescopic and multi-stage with a suction pad (2) at the upper end, these pistons being screwed to the central axis
- A series of multi-stage hydraulic pistons with a piece of cooled bronze for welding at the end (3), these pistons also being screwed to the central axis
- Fixed support (4) of the central axis (1) with hydraulic and telescopic pistons (5) making it possible to raise and lower the central axis depending on the size of the tubular structure to be manufactured, this support being located at one of the ends of the central axis (1)
- Movable support (6) with collapsible legs and a rolling system which allows the structure to be moved once manufactured, this being at the other end of the central axis (1)
- Three overhead travelling cranes (7) with drills (8) one of them parallel to the central axis and the other two perpendicular to it, all of which perforate the tubular structure as required, it being possible to move the overhead travelling cranes (7) over tracks.
- Automated welding tools (11) in submerged arc, in portal for welding of the panels (10) making up the final structure and which are moved over tracks (12)
- A panel container (9) where the panels (10) used for the manufacture of the structure are arranged

2. System as in claim 1 **characterised by** the central axis being a steel tube the thickness -diameter ratio of which avoids displacement of load.

3. System as in claim 1 **characterised by** the fact that the telescopic and multi-stage hydraulic pistons with suction pad (2) and the multi-stage hydraulic pistons with cooled bronze piece for welding (3) are screwed to the central axis in the alternate longitudinal rows, the number of rows of pistons with suction pad (2) being equal to the number of rows of pistons with bronze piece (3) and also equal to the number of faces of the tubular structure.

4. System as in claim 1 **characterised by** the fact that the panels (10) are arranged in the container (9) vertically and resting on their longer side.

5. System as in claim 1 **characterised by** the fact that the drills (8) of the overhead travelling cranes (7) can be moved along tracks to be positioned where required.

6. System as in claim 1 **characterised by** the fact that the drills (8) of the overhead travelling cranes (7) are not operative if it is not necessary to make perforations in the structure.

7. Procedure for the automated manufacture of tubular structures using the system described in any of the above claims including the following stages:
- The central axis (1) is positioned at a suitable height depending on the diameter of the structure to be manufactured
- A series of telescopic hydraulic pistons with suction pad (2) are extended to the container (9) where the panels are arranged and hold a first panel (10) by vacuum.
- Once the panel (10) is set the pistons with suction pad (2) turn the programmed angle and the pistons containing the bronze piece (3) are unfolded and positioned at the sides of the panel.
- Another series of pistons with suction pad (2) extend, take another panel and turn it by the programmed angle, and so on until there are three panels (10) in position for welding.
- The automated welding tools (11) begin at one end to weld the three panels longitudinally in a submerged arc; if perforations are necessary an overhead travelling crane (7) perpendicular to the central axis (1) makes perforations behind the welding tools and the other overhead travelling crane (7) with drills perpendicular to the central axis (1) begins to make perforations at the other end so that as the welding tools advance the latter overhead travelling crane (7) has made the necessary perforations; the overhead travelling crane (7) parallel to the central axis makes the appropriate perforations if necessary.
- Another series of pistons with suction pad (2) take another panel and the process is repeated as many times as necessary until the structure is completed, completely welded and with the necessary perforations made.
- Once the structure is manufactured and resting on motorised turning rollers it is moved and at the same time the legs of the movable support (6) of the central axis collapse and the support rests on wheels on the inner face of the structure to facilitate the movement.
- The manufactured structure is moved to an inspection and painting zone.

## Amended claims

### Amended claims under Art. 19.1 PCT

1. Equipment for the automated manufacture of tubular structures of any size and of polygonal geometry of any number of sides, of those having an automated welding equipment (11) in a submerged arc in portal and movable over tracks (12) for welding of the panels (10) that make up the final structure, characterized for comprising:
- A central axis (1) in the form of a tube in which a series of perforations have been made both longitudinally and radially,
- A series of hydraulic pistons, telescopic and multi-stage with a suction pad (2) at the upper end, these pistons being screwed to the central axis,
- A series of multi-stage hydraulic pistons with a piece of cooled bronze for welding at the end (3), these pistons also being screwed to the central axis,
- Fixed support (4) of the central axis (1) with hydraulic and telescopic pistons (5) making it possible to raise and lower the central axis depending on the size of the tubular structure to be manufactured, this support being located at one of the ends of the central axis (1),
- Movable support (6) with collapsible legs and a rolling system which allows the structure to be moved once manufactured, this being at the other end of the central axis (1),
- Three overhead travelling cranes (7) with drills (8) one of them parallel to the central axis and the other two perpendicular to it, all of which perforate the tubular structure as required, it being possible to move the overhead travelling cranes (7) over tracks (12),
- A panel container (9) where the panels (10) used for the manufacture of the structure are arranged

2. Equipment as in claim 1 **characterised by** the central axis being a steel tube the thickness - diameter ratio of which avoids displacement of load.

3. Equipment as in claim 1 **characterised by** the fact that the telescopic and multi-stage hydraulic pistons with suction pad (2) and the multi-stage hydraulic pistons with cooled bronze piece for welding (3) are screwed to the central axis in the alternate longitudinal rows, the number of rows of pistons with suction pad (2) being equal to the number of rows of pistons with bronze piece (3) and also equal to the number of faces of the tubular structure.

4. Equipment as in claim 1 **characterised by** the fact that the panels (10) are arranged in the container (9) vertically and resting on their longer side.

5. Equipment as in claim 1 **characterised by** the fact that the drills (8) of the overhead travelling cranes (7) can be moved along tracks to be positioned where required.

6. Equipment as in claim 1 **characterised by** the fact that the drills (8) of the overhead travelling cranes (7) are not operative if it is not necessary to make perforations in the structure.

7. Procedure for the automated manufacture of tubular structures using the equipment described in any of the above claims including the following stages:
- The central axis (1) is positioned at a suitable height depending on the diameter of the structure to be manufactured,
- A series of telescopic hydraulic pistons with suction pad (2) are extended to the container (9) where the panels are arranged and hold a first panel (10) by vacuum,
- Once the panel (10) is set the pistons with suction pad (2) turn the programmed angle and the pistons containing the bronze piece (3) are unfolded and positioned at the sides of the panel,
- Another series of pistons with suction pad (2) extend, take another panel and turn it by the programmed angle, and so on until there are three panels (10) in position for welding,
- The automated welding equipment (11) begin at one end to weld the three panels longitudinally in a submerged arc; if perforations are necessary an overhead travelling crane (7) perpendicular to the central axis (1) makes perforations behind the welding equipment and the other overhead travelling crane (7) with drills perpendicular to the central axis (1) begins to make perforations at the other end so that as the welding equipment advance the latter overhead travelling crane (7) has made the necessary perforations; the overhead travelling crane (7) parallel to the central axis makes the appropriate perforations if necessary,
- Another series of pistons with suction pad (2) take another panel and the process is repeated as many times as necessary until the structure is completed, completely welded and with the necessary perforations made,
- Once the structure is manufactured and resting on motorised turning rollers it is moved and at the same time the legs of the movable support (6) of the central axis collapse and the support rests on wheels on the inner face of the structure to facilitate the movement,
- The manufactured structure is moved to an inspection and painting zone.

Statement under Art. 19.1 PCT
The following amendments have been made to the claims:
● In claim 1, the characteristics that are part of the prior art, have moved from the characterizing part to the preamble of said claim.
● Claims from 2 to 6 have been amended in order to start by the wording "Equipment" instead of "System", thus maintaining their coherence with claim 1 and with the title.
● In the second line of claim 7, the wording "system" has also been replaced by "equipment".
